(19) Europäisches Patentamt
European Patent Office
Office européen des brevets

(11) **EP 1 250 752 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(21) Anmeldenummer: **00991090.2**

(22) Anmeldetag: **16.12.2000**

(51) Int Cl.:
*H03F 1/00* *(2006.01)*

(86) Internationale Anmeldenummer:
**PCT/DE2000/004507**

(87) Internationale Veröffentlichungsnummer:
**WO 2001/048910 (05.07.2001 Gazette 2001/27)**

(54) **SENDER ZUM VERSENDEN VON SIGNALEN ÜBER FUNKKANÄLE UND VERFAHREN ZUM SENDEN VON SIGNALEN ÜBER FUNKKANÄLE**

TRANSMITTER FOR TRANSMITTING SIGNALS OVER RADIO CHANNELS AND METHOD FOR TRANSMITTING SIGNALS OVER RADIO CHANNELS

EMETTEUR DESTINE A EMETTRE DES SIGNAUX PAR DES CANAUX RADIO ET PROCEDE D'EMISSION DE SIGNAUX PAR DES CANAUX RADIO

(84) Benannte Vertragsstaaten:
**DE FR GB IT**

(30) Priorität: **23.12.1999 DE 19962340**

(43) Veröffentlichungstag der Anmeldung:
**23.10.2002 Patentblatt 2002/43**

(73) Patentinhaber: **ROBERT BOSCH GMBH**
**70442 Stuttgart (DE)**

(72) Erfinder:
• **SCHRADER, Marc**
  **30161 Hannover (DE)**
• **LOCHAU, Mirko**
  **31134 Hildesheim (DE)**
• **HARMS, Lars**
  **31134 Hildesheim (DE)**
• **HENTATI, Nabil**
  **30165 Hannover (DE)**

(56) Entgegenhaltungen:
WO-A-99/45640          DE-A- 3 307 309
US-A- 4 329 655

## Beschreibung

Stand der Technik

Die Erfindung geht aus von einem Sender zum Versenden von Signalen über Funkkanäle bzw. von einem Verfahren zum Senden von Signalen über Funkkanäle nach der Gattung der unabhängigen Patentansprüche.

Es ist aus WO 99/45640 bekannt einen Verstärker mittels einer Vorverzeureranordnung zu linearisieren.

Es ist weiters bereits aus M. Schrader und N. Hentati "Reduktion von Außerbandstrahlung von Sendestufen im DAB-COFDM-System", OFDM Fachgespräche, September 1998, Braunschweig, abgedruckt im Konferenzband, bekannt, daß OFDM (Orthogonaler FrequenzMultiplex, engl. Orthogonal Frequency Division Multiplex) Signale vorverzerrt werden und zwar nach den Übertragungseigenschaften des Verstärkers im Sender. Dies ist notwendig, da die OFDM-Signale aufgrund des großen Unterschiedes zwischen den kleinen und den großen Amplituden, die in den OFDM-Signalen vorkommen, also der Dynamik oder Amplitudenvarianz, hohe Anforderungen an eine Linearität des Verstärkers im Sender stellen, weil alle Amplituden des OFDM-Signals linear verstärkt werden sollen. Es wurde in dem oben erwähnten Beitrag ein rückgekoppeltes System zur Vorverzerrung vorgeschlagen, bei dem ein Teil des verstärkten OFDM-Signals rückgekoppelt wird und mit einem gepufferten OFDM-Signal verglichen wird, um die Übertragungseigenschaften des Verstärkers im Sender zu bestimmen. Das gepufferte OFDM-Signal ist das OFDM-Signal, das dann verstärkt und rückgekoppelt wird. Da das OFDM-Signal einem Rauschsignal in seinen Eigenschaften sehr ähnlich ist, ist eine anspruchsvolle Synchronisation für das gepufferte OFDM-Signal und das verstärkte OFDM-Signal hier erforderlich.

Vorteile der Erfindung

Der erfindungsgemäße Sender zum Versenden von Signalen über Funkkanäle bzw. das erfindungsgemäße Verfahren zum Senden von Signalen über Funkkanäle mit den Merkmalen der unabhängigen Patentansprüche hat demgegenüber den Vorteil, daß ein Meßsignal mit dem OFDM-Signal multipliziert wird, um die Übertragungseigenschaften des Verstärkers zu bestimmen. Das hat den Vorteil, daß die kompletten Übertragungseigenschaften des Verstärkers ermittelt werden und damit eine bessere Vorverzerrung der OFDM-Signale ermöglicht wird.

Weiterhin ist von Vorteil, daß das Meßsignal nur in vorgegebenen Zeitabschnitten eingetastet wird, wodurch eine Verschlechterung des gesendeten Signals durch die Multiplikation mit dem Meßsignal minimiert wird.

Durch die in den abhängigen Ansprüchen aufgeführten Maßnahmen sind vorteilhafte Weiterbildungen und Verbesserungen des in den unabhängigen Patentansprüchen angegebenen Senders bzw. Verfahrens möglich.

Besonders vorteilhaft ist, daß als Modulationsverfahren für ein Aufprägen der Information auf die OFDM-Signale eine differentielle Phasenmodulation, vorzugsweise eine differentielle Quadraturphasenumtastung, eingesetzt wird. Dies hat den Vorteil, daß der Empfänger keine absolute Phase bestimmen muß, sondern allein die Phasenänderung zwischen den Signalen für eine Demodulation ermitteln muß.

Darüber hinaus ist es von Vorteil, daß das Meßsignal ein Gleichsignal ist, das durch die Multiplikation das OFDM-Signal in die Sättigung des Verstärkers treibt. Dadurch wird die Übertragungskennlinie insbesondere auch in dem nichtlinearen Bereich des Verstärkers ermittelt.

Weiterhin ist es von Vorteil, daß ein Multiplizierer das Meßsignal mit einem bestimmten Symbol in den Signalen multipliziert, so daß einerseits eine Synchronisation im Symboltakt der Signale möglich ist und zum anderen ein Symbol ausgewählt wird, dessen Verlust für den Empfänger keine wesentlichen Konsequenzen hat.

Insbesondere ist es von Vorteil, daß das Meßsignal bei DAB mit einem Fast-Information-Channel-Symbol multipliziert wird, denn der Verlust des Fast-Information-Channel-Symbols für den Empfänger ist nicht wesentlich, da in dem Fast-Information-Channel-Symbol Daten über den Datenaufbau im Main-Service-Channel abgelegt sind, die ohnehin häufig wiederholt werden.

Zeichnung

Ausführungsbeispiele der Erfindung sind in der Zeichnung dargestellt und in der nachfolgenden Beschreibung näher erläutert. Es zeigen Figur 1 ein Blockschaltbild eines erfindungsgemäßen OFDM-Senders, Figur 2 einen DAB-Rahmen und Figur 3 ein erfindungsgemäßes Verfahren zum Senden von Signalen über Funkkanäle.

Beschreibung der Ausführungsbeispiele

Orthogonaler Frequenzmultiplex (engl. Orthogonal Frequency Division Multiplex = OFDM) ist ein bekanntes und erfolgreiches Verfahren für mobile Funkanwendungen. Bei OFDM werden die zu versendenden Signale auf viele Unterträger verteilt, wobei diese Unterträger zueinander einen bestimmten Frequenzabstand haben, so daß sich die auf die Unterträger verteilten Signale gegenseitig nicht stören. Dieses Verhalten wird mit orthogonal beschrieben.

OFDM wird daher für digitale Rundfunkübertragungsverfahren eingesetzt, insbesondere für den mobilen Empfang, zum Beispiel mittels Autoradios. Dazu gehören DAB (Digital Audio Broadcasting), DVB (Digital Video Broadcasting) und DRM (Digital Radio Mondial). Diese Rundfunkübertragungsverfahren profitieren von der Eigenschaft von OFDM, daß, wenn eine frequenzselektive Dämpfung auftritt, nur ein geringer Teil des übertragenen Rundfunksignals gestört wird, da das Rundfunksignal auf eine Vielzahl von Frequenzen verteilt wurde und nur ein Signalanteil gestört wird, der auf einer Frequenz übertragen wird, bei der eine starke Dämpfung auftritt. Der gestörte Signalanteil wird durch fehlerdetektierende- und korrigierende Maßnahmen korrigiert. Zu diesen fehlerdetektierenden und -korrigierenden Maßnahmen gehören fehlerdetektierende und -korrigierende Codes wie z.B. Blockcodes oder Faltungscodes.

Bei OFDM tritt nach dem Verteilen der zu übertragenden Signale auf die Unterträger eine Summierung im Zeitbereich der verteilten Signale auf, wobei die Amplituden sich so addieren können, daß die Amplituden des überlagerten Signals zu bestimmten Zeitpunkten einmal einen sehr großen Wert annehmen und zum anderen einen sehr kleinen Wert annehmen. Dies hängt von der Phasenbeziehung der sich addierenden Signalanteile ab, ob sich die Signale konstruktiv oder destruktiv addieren. Ein Verstärker im Sender hat dabei die Aufgabe, alle Amplituden gleich zu verstärken, so daß keine nichtlinearen Verzerrungen auftreten.

Um die Übertragungseigenschaften des Verstärkers im Sender zu berücksichtigen, ist eine Vorverzerrung vorgesehen. Um eine Übertragungskennlinie des Verstärkers zu bestimmen, muß ein Signal, das von dem Verstärker verstärkt wurde, mit dem ursprünglichen Signal verglichen werden. Das OFDM-Signal ist aufgrund der unkorrelierten Folge von Amplituden, die durch die Addition der einzelnen Signalanteile auftritt, eine Herausforderung, da eine Synchronisation des ursprünglichen OFDM-Signals mit dem verstärkten OFDM-Signal schwierig ist.

Für die Verstärkung der OFDM-Signale soll der Verstärker nur im linearen Bereich betrieben werden. Wird ein Signal, das bei einer bestimmten Frequenz übertragen wird, auf eine nichtlineare Kennlinie gegeben, z.B. eben die des Verstärkers, entstehen Frequenzkomponenten bei Vielfachen dieser bestimmten Frequenz. Sind diese Vielfachen außerhalb des Sendefrequenzspektrums, spricht man von Außerbandstrahlung, da dann Signalenergie außerhalb des verfügbaren Spektrums übertragen wird und damit für die Signalübertragung verlorengeht, weil ein Empfänger die Außerbandstrahlung herausfiltert. Darüber hinaus stört die Außerbandstrahlung andere Übertragungssysteme die bei Frequenzen eingesetzt werden, bei denen die Außerbandstrahlung auftritt.

Sind neue Frequenzkomponenten innerhalb des zur Verfügung stehenden Sendefrequenzspektrums vorhanden, werden unerwünschte Signalkomponenten im Empfänger demoduliert. Es kommt also zu einem Nebensprechen. Dadurch wird die Signalqualität und damit die Bitfehlerrate des empfangenen Signals entscheidend verschlechtert. Die Bitfehlerrate gibt an, wie viele Bits pro empfangenen Bits falsch detektiert werden. Um die Bitfehlerrate zu bestimmen, werden die fehlerdetektierenden Codes verwendet. Das OFDM-Signal liegt also nach dem Verteilen der zu übertragenden Signale auf die Unterträger wie ein Rauschsignal vor, wobei einzelne Amplitudenspitzen den Verstärker des Senders in den nichtlinearen Bereich treiben können. Daher ist eine Vorverzerrung des OFDM-Signals notwendig, damit die Kennlinie des Verstärkers keinen Einfluß auf das Spektrum des OFDM-Signals nimmt.

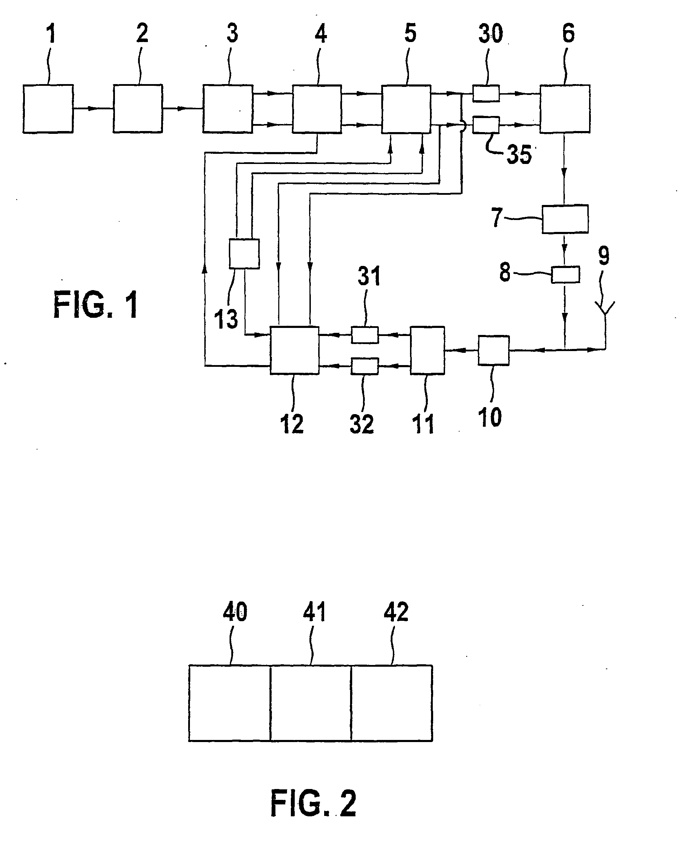

In Figur 1 ist ein Blockschaltbild eines erfindungsgemäßen OFDM-Senders dargestellt. Eine Datenquelle 1 dient hier zur Erzeugung der Daten. Die Datenquelle 1 ist hier ein Mikrophon mit angeschlossener Elektronik zur Verstärkung und Digitalisierung der vom Mikrophon gewandelten Sprachsignale. Das Mikrophon 1 wandelt Schallwellen in analoge elektrische Signale um, die von der an das Mikrophon angeschlossenen Elektronik verstärkt und digitalisiert werden. Der aus diesen Sprachsignalen entstandene digitale Datenstrom führt in eine Quellencodierung 2. Diese Quellencodierung 2 wird auf einem Prozessor durchgeführt.

Die Quellencodierung 2 reduziert die Zahl der Bits die aus den Sprachsignalen entstanden ist, indem die Quellencodierung 2 Redundanz aus dem digitalen Datenstrom entnimmt. Unter Ausnutzung von psychoakustischen Modellen werden aus den Sprachsignalen Daten eliminiert, die zur Wiedergabe der Sprachsignale nicht notwendig sind. Der durch die Quellencodierung 2 reduzierte Datenstrom wird dann auf einen OFDM-Modulator 3 gegeben. Im übrigen können neben Sprachsignalen auch andere Daten wie Text-, Bild- und Videodaten übertragen werden. Hier wird dann eine für die Art der Daten spezifische Quellencodierung vorgenommen.

Der OFDM-Modulator 3 führt zunächst eine differentielle Phasenmodulation der zu übertragenden Signale durch. Dazu wird die differentielle Quadraturphasenumtastung, die englisch als Differential Quadrature Phase Shift Keying (DQPSK) bezeichnet wird, verwendet. Die DQPSK ist eine digitale Modulation, bei der die Phasenänderung des Signals moduliert wird. Dabei wird die Phasenänderung in einem bestimmten Zeitabstand, also pro Bit, als Modulationssignal eingesetzt. Hier wird eine Phasenänderung von +/- 90° verwendet. Differentielle Modulationsverfahren haben den Vorteil, daß kein Absolutwert im Empfänger ermittelt werden muß, um die Signale zu demodulieren, da die übertragene Information in der Phasenänderung der übertragenen Signale enthalten ist. Eine Bitfolge von 110 führt also zu einer Phasenänderung von jeweils +90° für die beiden Einsen und -90° für die Null.

Neben der DQPSK können auch andere differentielle oder nicht differentielle Phasenmodulationsverfahren angewendet werden. Es ist jedoch auch möglich, auch Amplitudenmodulationsverfahren oder Frequenzmodulationsverfahren hier einzusetzen.

Die DQPSK ist ein komplexes Modulationsverfahren, da die Bits des Bitstroms der in den OFDM-Modulator 3 geführt wird auf Phasenänderungen abgebildet werden. Wird eine Phase eines Signals verändert, benutzt man eine komplexe Ebene für die grafische Darstellung der Signale als Zeiger, wobei ein Realteil auf der Abszisse und ein Imaginärteil auf der Ordinate abgetragen wird. Ein Signal mit einer Phase von >0 wird, um diese Phase in der komplexen Ebene gegen den Uhrzeigersinn von der Abszisse aus gedreht. Führt man viermal eine Phasenänderung um 90° durch, ist man wieder bei dem Ausgangssignal. Es sind demnach vier von einander unterscheidbare Modulationszustände mit DQPSK möglich.

Neben der differentiellen QPSK führt der OFDM-Modulator 3 die Verteilung der zu demodulierenden Signale auf die Unterträger durch, so daß ein OFDM-Signal entsteht. Da als Folge der DQPSK, die der OFDM-Modulator 3 durchführt, ein komplexes Signal entsteht, ist ein erster und ein zweiter Datenausgang vom OFDM-Modulator 3 an einen ersten und zweiten Dateneingang eines Vorverzerrers 4 angeschlossen, um zwei Anteile des Signals Imaginär- und Realteil getrennt zu verarbeiten.

Die vorverzerrten Signale gelangen nach dem Vorverzerrer 4 zu einem Multiplizierer 5. Die Signale sind nach wie vor komplex, so daß von dem Vorverzerrer 4 zwei Datenausgänge zu dem Multiplizierer 5 führen. Der Multiplizierer 5 multipliziert ein Meßsignal mit dem vorverzerrten OFDM-Signal. Der Multiplizierer 5 multipliziert demnach das Meßsignal mit dem OFDM-Signal zu bestimmten Zeitpunkten, so daß das Meßsignal das OFDM-Signal zu diesen Zeitpunkten verändert. Diese Zeitpunkte sind vorgegeben, z.B. jede Stunde oder einmal pro Tag. Vor dem tatsächlichen Betrieb des erfindungsgemäßen Senders wird diese Messung durchgeführt und dann später zu den vorgegebenen Zeitpunkten während dem Betrieb des Senders fortgesetzt.

Alternativ kann der Multiplizierer 5 auch vor dem Vorverzerrer 4 eingesetzt werden, wenn der Vorverzerrer 4 mit einem Satz konstanter Werte geladen wird.

Bei DAB ist zu Beginn eines DAB-Rahmens mit dem die DAB-Signale übertragen werden, ein Nullsymbol zur Synchronisation vorgesehen. Figur 2 zeigt einen DAB-Rahmen. Ein Synchronisationskanal 40 zu Beginn des DAB-Rahmens weist das Nullsymbol auf. In einem sogenannten Fast Information Channel 41 werden Informationen über den Multiplex und andere Service-Informationen übertragen. Ein sogenannter Main-Service-Channel 42 weist die zu übertragenden Daten wie Audioprogramme und/oder Multimediadaten auf.

Mit dem Fast-Information-Channel 41 wird das Meßsignal multipliziert, so daß keine anderen Daten, die im DAB-Rahmen übertragen werden, überschrieben werden. Es ist akzeptabel, daß der Fast-Information-Channel 41 mit dem Meßsignal verändert wird. Da die im Fast-Information-Channel enthaltenen Informationen nicht absolut notwendig für den Empfänger sind und ohnehin häufig wiederholt werden. Das Meßsignal, das auch komplex ist, wird von einem Signalgenerator 13 erzeugt. Der Signalgenerator 13 weist zwei Dateneingänge auf, die zu dem Multiplizierer 5 führen. Der Multiplizierer 5 erhält damit über seinen dritten und vierten Dateneingang das Meßsignal von dem Signalgenerator 13. Der Signalgenerator 13 ist eine Gleichspannungsquelle.

Das Meßsignal hat allein die Forderung zu erfüllen, daß es das OFDM-Signal in den Sättigungsbereich des Verstärkers treibt. Weiterhin wird das Meßsignal die zeitliche Länge mindestens eines Symboles haben oder von Vielfachen eines Symboles. Darüber hinaus wird das Meßsignal mit einem OFDM-Symbol in den OFDM-Signalen synchronisiert, so daß durch das Meßsignal nicht zwei Symbole beeinträchtigt werden. Das Meßsignal ist demnach ein Gleichspannungssignal, das wie ein konstanter Faktor wirkt, mit dem das OFDM-Signal multipliziert wird.

Das OFDM-Signal, das das Symbol aufweist, mit dem das Meßsignal multipliziert wurde, geht über den ersten und zweiten Datenausgang als komplexes Signal von dem Multiplizierer 5 zu jeweils einem Digital-Analog-Wandler 30 und 35, die die Anteile des komplexen Signals in analoge Signale umwandeln, welche dann in einen Quadraturmodulator 6 gelangen. Mit dem Quadraturmodulator 6 wird das komplexe OFDM-Signal mit dem OFDM-Symbol, das mit dem Meßsignal multipliziert wurde in ein reales Signal umgewandelt. Dabei wird das komplexe Signal y(t), das mathematisch mit

$$y(t) = a(t) + jb(t)$$

beschrieben wird und durch folgende Vorschrift in ein reelles Signal x(t) umgewandelt:

$$x(t) = a(t)\cos(\omega t) - b(t)\sin(\omega t)$$

Dabei ist ω eine Frequenz, um die das OFDM-Signal durch eine Aufwärtsmischung in eine Zwischenfrequenz umgesetzt wird.

Nach dem Quadraturmodulator 6 folgt eben die Aufwärtsmischung 7, wobei nun das reelle OFDM-Signal in den Zwischenfrequenzbereich umgesetzt wird. Die Aufwärtsmischung 7 weist daher einen Oszillator auf, um die Frequenz zu erzeugen, um die das OFDM-Signal verschoben werden soll.

Das in die Zwischenfrequenz umgesetzte OFDM-Signal wird nach der Aufwärtsmischung 7 in den Verstärker 8 geführt oder entsprechend der Übertragungskennlinie des Verstärkers 8 verstärkt. Nach dem Verstärker 8 gelangen die OFDM-Signale einerseits zu einer Antenne 9, um damit versendet zu werden und andererseits zu einer Abwärtsmischung 10, die das verstärkte Signal wieder in ein Basisband herabsetzt. Dieser Anteil des OFDM-Signals wird also rückgekoppelt. Der Anteil ist natürlich im Vergleich zum versendeten Anteil sehr klein, zum Beispiel kleiner als ein Prozent, da die meiste Signalenergie zur Abstrahlung der OFDM-Signale verwendet wird. Die Auskopplung des rückgekoppelten OFDM-Signals erfolgt mit einem Richtkoppler. Der Richtkoppler weist zwei Leitungen auf, die so plaziert sind, daß eine elektromagnetische Auskopplung von Signalenergie von einer Leitung zur anderen Leitung ermöglicht wird.

Das Basisband ist der Frequenzbereich, in dem die Daten erzeugt wurden. Nach der Abwärtsmischung 10 wird in einem Quadraturdemodulator aus dem reellen Signal wieder ein komplexes Signal erzeugt, so daß der Quadraturmodulator 11 über zwei Datenausgänge verfügt, an die jeweils ein Analog-Digital-Wandler 31 und 32 angeschlossen ist, die die Anteile des komplexen Signals digitalisieren. Die digitalisierten Signale gelangen dann in das Meßmodul 12.

Das Meßmodul 12 erhält über seinen ersten und zweiten Dateneingang das OFDM-Signal mit dem Symbol, das mit den Meßsignalen multipliziert wurde. Weiterhin wurde dieses OFDM-Signal von dem Verstärker 8 verstärkt. Über seinen dritten und vierten Dateneingang erhält das Meßmodul 12 von dem ersten und zweiten Datenausgang des Multiplizierers 5 das OFDM-Signal mit dem OFDM-Symbol, das mit dem Meßsignal multipliziert wurde. Dafür wurde dieses Symbol zwischengespeichert. Das so veränderte OFDM-Signal, das von dem Multiplizierer 5 zum Meßmodul 12 geführt wird, wird im Meßmodul 12 zwischengespeichert, bis das gleiche OFDM-Signal mit dem Symbol, das mit dem Meßsignal multipliziert wurde, von dem Quadraturdemodulator 11 zum Meßmodul 12 gesendet wird. Damit wird ein Vergleich des OFDM-Symbols, das mit dem Meßsignal multipliziert wurde vor und nach dem Verstärker 8 möglich.

Durch den Vergleich nach Betrag und Phasenabhängigkeit von den Eingangsamplituden wird die Übertragungskennlinie des Verstärkers 8 bestimmt. Um die Synchronisation durchzuführen, ist das Meßmodul 12 über seinen fünften Dateneingang mit einem dritten Datenausgang des Signalgenerators 13 verbunden, so daß das Meßmodul 12 darüber informiert wird, wann ein Meßsignal erzeugt wird. Das Meßmodul 12 weist einen Datenausgang auf, der mit einem zweiten Dateneingang des Vorverzerrers 4 verbunden ist, so daß der Vorverzerrer 4 gemäß der übermittelten Übertragungskennlinie des Verstärkers 8 die von dem OFDM-Modulator kommenden Signal vorverzerrt. Das Meßmodul 12 arbeitet nur, wenn ein Meßsignal mit einem OFDM-Symbol multipliziert wird. Wird kein Meßsignal mit dem OFDM-Signal multipliziert, dann läßt der Multiplizierer 5 das OFDM-Signal unverändert passieren.

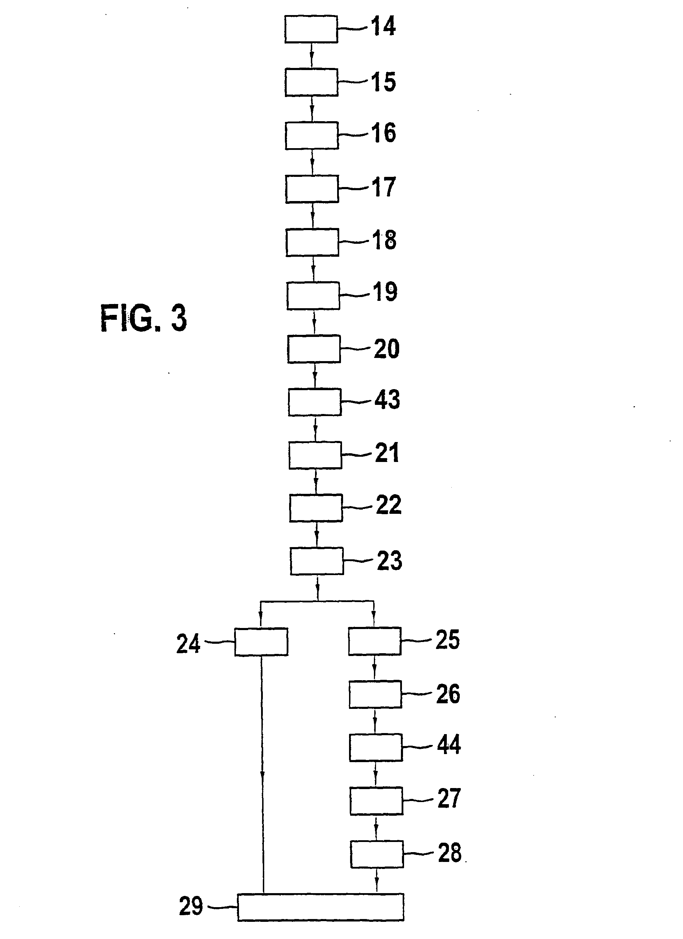

In Figur 3 ist ein erfindungsgemäßes Verfahren zum Senden von Signalen über Funkanäle dargestellt. In Verfahrensschritt 14 werden die Daten erzeugt. Dies geschieht mittels eines Mikrophons, wie es oben beschrieben wurde. Aber auch andere Datenquellen sind möglich, wozu zum Beispiel ein Computer mit einer Tastatur gehört. In Verfahrensschritt 15 wird eine Quellencodierung durchgeführt, wobei von den Sprachsignalen Redundanz genommen wird, die für eine Rekonstruktion der Sprachdaten im Empfänger nicht notwendig sind. In Verfahrensschritt 16 wird eine Modulation des Datenstroms nach der Quellencodierung 15 durchgeführt, wobei hier eine, wie oben beschrieben wurde, differentielle Phasenmodulation durchgeführt wird.

In Verfahrensschritt 17 wird mittel einer OFDM-Modulation der Datenstrom auf verschiedene Unterträger verteilt. In Verfahrensschritt 18 wird eine Vorverzerrung gemäß der Übertragungskennlinie des Verstärkers 8 vorgenommen. In Verfahrensschritt 19 wird ein Meßsignal erzeugt. In Verfahrensschritt 20 wird das Meßsignal mit einem Symbol des vorverzerrten OFDM-Signals zu bestimmten Zeitpunkten multipliziert, und zwar insbesondere mit einem Symbol des Fast-Information-Channels. In Verfahrensschritt 43 wird eine digitale Analogwandlung des OFDM-Signals mit dem Meßsignal vorgenommen. In Verfahrensschritt 21 wird eine Quadraturmodulation durchgeführt, um aus dem komplexen Signal ein reelles Signal herzustellen.

In Verfahrensschritt 22 wird das reelle Signal in die Zwischenfrequenz umgesetzt. In Verfahrensschritt 23 wird mittels des Verstärkers 8 eine Verstärkung des umgesetzten Signals vorgenommen. In Verfahrensschritt 24 wird das verstärkte Signal versendet, während ein Teil des verstärkten Signals in Verfahrensschritt 25 wieder abwärts gemischt wird und mit einem Quadraturmodulator in Verfahrensschritt 26 in ein komplexes Signal wieder umgewandelt wird. In Verfahrensschritt 44 wird eine Analog-/Digital-Wandlung des komplexen Signals vorgenommen, um in Verfahrensschritt 27 einen Vergleich des OFDM-Symbols, das mit dem Meßsignal multipliziert wurde vor und nach dem Verstärker 8 durchzuführen, um die Übertragungskennlinie des Verstärkers 8 zu ermitteln. Wird kein Meßsignal multipliziert, endet hier das Verfahren. In Verfahrensschritt 28 wird der Vorverzerrer entsprechend der ermittelten Übertragungskennlinie des Verstärkers 8 eingestellt. In Verfahrensschritt 29 endet das Verfahren.

Auch hier kann alternativ die Multiplikation vor der Vorverzerrung durchgeführt werden, wie es oben beschrieben wurde.

**Patentansprüche**

1. Sender zum Versenden von Signalen über Funkkanäle, wobei ein Modulator (3) eine Modulation an den zu versendenden Signalen durchführt und die modulierten Signale auf verschiedene Unterträger verteilt, wobei ein Vorverzerrer (4) die auf verschiedene Unterträger verteilten Signale gemäß den Übertragungseigenschaften eines Verstärkers (8) vorverzerrt, wobei ein Mischer (7) die vorverzerrten Signale von einem Basisband in eine Zwischenfrequenz umsetzt, wobei der Verstärker (8) die umgesetzten Signale verstärkt, wobei eine Antenne (9) einen ersten Teil der verstärkten Signale versendet, wobei ein Mischer (10) einen zweiten Teil der verstärkten Signale von der Zwischenfrequenz in das Basisband heruntermischt, wobei ein Meßmodul (12) die heruntergemischten Signale mit den vorverzerrten Signalen vergleicht, um die Übertragungseigenschaften des Verstärkers (8) zu ermitteln und dem Vorverzerrer (4) die Übertragungseigenschaften des Verstärkers (8) mitteilt, **dadurch gekennzeichnet, daß** ein Signalgenerator (13) ein Meßsignal erzeugt, daß ein Multiplizierer (5) das Meßsignal mit den Signalen in vorgegebenen Zeitabschnitten multipliziert und daß das Meßmodul (12) das Meßsignal in den heruntergemischten Signalen mit dem Meßsignal in den Signalen vergleicht, um die Übertragungseigenschaften des Verstärkers (8) zu erhalten.

2. Sender nach Anspruch 1, **dadurch gekennzeichnet, daß** der Multiplizierer (5) das Meßsignal mit den vorverzerrten Signalen in den vorgegebenen Zeitabschnitten multipliziert.

3. Sender nach Anspruch 1, **dadurch gekennzeichnet, daß** der Multiplizierer (5) das Meßsignal vor dem Vorverzerrer (4) mit den Signalen in den vorgegebenen Zeitabschnitten multipliziert.

4. Sender nach Anspruch 1, **dadurch gekennzeichnet, daß** der Modulator (3) eine differentielle Phasenmodulation, vorzugsweise eine differentielle Quadraturphasenumtastung, durchführt.

5. Sender nach Anspruch 1, **dadurch gekennzeichnet, daß** der Signalgenerator (13) als Meßsignal in den vorgegebenen Zeitabschnitten ein Gleichsignal erzeugt, wobei eine Amplitude des Gleichsignals den Verstärker in die Sättigung treibt.

6. Sender nach Anspruch 5, **dadurch gekennzeichnet, daß** der Multiplizierer das Meßsignal mit einem bestimmten Symbol in den Signalen multipliziert.

7. Verfahren zum Senden von Signalen über Funkkanäle, wobei die zu versendenden Signale moduliert werden, wobei die modulierten Signale auf Unterträger verteilt werden, wobei die auf die Unterträger verteilten Signale gemäß den Übertragungseigenschaften eines Verstärkers (8) vorverzerrt werden, wobei die vorverzerrten Signale von einem Basisband in eine Zwischenfrequenz umgesetzt werden, wobei die umgesetzten Signale verstärkt werden, wobei ein erster Teil der verstärkten Signale über die Funkkanäle versendet wird, wobei ein zweiter Teil der verstärkten Signale von einer Zwischenfrequenz in das Basisband umgesetzt wird, wobei die vorverzerrten Signale und die in das Basisband umgesetzten Signale verglichen werden, um die Übertragungseigenschaften des Verstärkers (8) zu ermitteln und dann einem Vorverzerrer (4) mitzuteilen, **dadurch gekennzeichnet, daß** Meßsignale erzeugt werden, daß die Meßsignale mit den Signalen multipliziert werden und daß das Meßsignal in den Signalen mit dem Meßsignal der verstärkten und in das Basisband umgesetzten Signale verglichen wird, um die Übertragungseigenschaften des Verstärkers (8) zu ermitteln.

8. Verfahren nach Anspruch 7, **dadurch gekennzeichnet, daß** die Meßsignale mit den vorverzerrten Signalen multipliziert werden.

9. Verfahren nach Anspruch 7, **dadurch gekennzeichnet, daß** die Meßsignale vor dem Vorverzerrer (4) mit den Signalen multipliziert werden.

10. Verfahren nach Anspruch 7, **dadurch** gekennezichnet, daß die Amplitude des Meßsignals eine Größe aufweist, so daß der Verstärker (8) durch das Meßsignal mindestens voll ausgesteuert wird.

11. Verfahren nach Anspruch 10, **dadurch gekennzeichnet, daß** das Meßsignal mit einem Fast-Information-Channel-Symbol multipliziert wird.

## Claims

1. Transmitter for transmission of signals via radio channels, with a modulator (3) carrying out a modulation process on the signals to be transmitted and distributing the modulated signals to various subcarriers, with a predistorter (4) predistorting the signals distributed to the various subcarriers in accordance with the transmission characteristics of an amplifier (8), with a mixer (7) converting the predistorted signals from baseband to an intermediate frequency, with the amplifier (8) amplifying the converted signals, with an antenna (9) transmitting a first portion of the amplified signal, with a mixer (10) down-mixing a second portion of the amplified signal from the intermediate frequency to baseband, with a measurement module (12) comparing the down-mixed signals with the predistorted signals in order to determine the transmission characteristics of the amplifier (8), and signalling the transmission characteristics of the amplifier (8) to the predistorter (4), **characterized in that** a signal generator (13) produces a measurement signal, **in that** a multiplier (5) multiplies the measurement signal by the signals at predetermined times, and **in that** the measurement module (12) compares the measurement signal in the down-mixed signals with the measurement signal in the signals, in order to obtain the transmission characteristics of the amplifier (8).

2. Transmitter according to Claim 1, **characterized in**

**that** the multiplier (5) multiplies the measurement signal by the predistorted signals at the predetermined times.

3. Transmitter according to Claim 1, **characterized in that** the multiplier (5) multiplies the measurement signal upstream of the predistorter (4), by the signals at the predetermined times.

4. Transmitter according to Claim 1, **characterized in that** the modulator (3) carries out differential phase modulation, preferably differential quadrature phase keying.

5. Transmitter according to Claim 1, **characterized in that** the signal generator (13) produces a constant signal as the measurement signal at the predetermined times, with the amplitude of the constant signal saturating the amplifier.

6. Transmitter according to Claim 5, **characterized in that** the multiplier multiplies the measurement signal by a specific symbol in the signals.

7. Method for transmission of signals via radio channels, with the signals to be transmitted being modulated, with the modulated signals being distributed to subcarriers, with the signals distributed to the subcarriers being predistorted in accordance with the transmission characteristics of an amplifier (8), with the predistorted signals being converted from baseband to an intermediate frequency, with the converter signals being amplified, with a first portion of the amplified signals being transmitted via the radio channels, with a second portion of the amplified signals being converted from an intermediate frequency to baseband, with the predistorted signals and the signals which have been converted to baseband being compared in order to determine the transmission characteristics of the amplifier (8), and then being signalled to a predistorter (4), **characterized in that** measurement signals are produced, **in that** the measurement signals are multiplied by the signals, and **in that** the measurement signal in the signals is compared with the measurement signal of the amplified signals which have been converted to baseband, in order to determine the transmission characteristics of the amplifier (8).

8. Method according to Claim 7, **characterized in that** the measurement signal is multiplied by the predistorted signals.

9. Method according to Claim 7, **characterized in that** the measurement signal is multiplied by the signal upstream of the predistorter (4).

10. Method according to Claim 7, **characterized in that** the amplitude of the measurement signal has a magnitude such that the amplifier (8) is at least fully driven by the measurement signal.

11. Method according to Claim 10, **characterized in that** the measurement signal is multiplied by a fast information channel symbol.

## Revendications

1. Emetteur pour émettre des signaux par des canaux radio selon lequel :

   - un modulateur (3) effectue une modulation sur les signaux à émettre et répartit les signaux modulés entre différentes sous-porteuses,
   - un correcteur de distorsion corrige les signaux répartis entre les différentes sous-porteuses selon les caractéristiques de transmission d'un amplificateur (8),
   - un mélangeur (7) convertit les signaux corrigés d'une bande de base dans une fréquence intermédiaire,
   - l'amplificateur (8) amplifiant les signaux convertis,
   - une antenne (9) émettant une première partie des signaux amplifiés,
   - un mélangeur (10) mélangeant dans le sens descendant une seconde partie des signaux amplifiés de la fréquence intermédiaire jusque dans la fréquence de base,
   - un module de mesure (12) comparant les signaux mélangés dans le sens descendant aux signaux corrigés pour déterminer les caractéristiques de transmission de l'amplificateur (8) et transmettre au circuit de correction (4) les caractéristiques de transmission de l'amplificateur (8),

   **caractérisé en ce qu'**
   un générateur de signal (13) génère un signal de mesure,
   un multiplicateur (5) multiplie le signal de mesure aux signaux dans des segments de temps prédéfinis et
   le module de mesure (12) compare le signal de mesure contenu dans les signaux mélangés dans le sens descendant au signal de mesure contenu dans les signaux pour obtenir les caractéristiques de transmission de l'amplificateur (8).

2. Emetteur selon la revendication 1,
   **caractérisé en ce que**
   le multiplicateur (5) multiplie le signal de mesure avec les signaux corrigés dans des segments de temps prédéfinis.

**3.** Emetteur selon la revendication 1, **caractérisé en ce que** le multiplicateur (5) multiplie le signal de mesure en amont du circuit de correction (4) avec les signaux dans les segments de temps prédéfinis.

**4.** Emetteur selon la revendication 1, **caractérisé en ce que** le modulateur (3) effectue une modulation de phase, différentielle, de préférence une conversion différentielle en quadrature de phase.

**5.** Emetteur selon la revendication 1, **caractérisé en ce que** le générateur de signal (13) génère un signal continu comme signal de mesure dans les segments de temps prédéfinis, l'amplitude du signal continu poussant l'amplificateur en saturation.

**6.** Emetteur selon la revendication 5, **caractérisé en ce que** le multiplicateur multiplie le signal de mesure en signaux avec un symbole déterminé.

**7.** Procédé d'émission de signaux par des canaux radio selon lequel on module les signaux à émettre, on répartit les signaux modulés entre des sous-porteuses, on corrige les signaux répartis entre les sous-porteuses selon les caractéristiques de transmission d'un amplificateur (8), on transfère les signaux corrigés d'une bande de base à une fréquence intermédiaire, on amplifie les signaux convertis, on émet une première partie des signaux amplifiés par les canaux radio, on transfère une seconde partie des signaux amplifiés d'une fréquence intermédiaire à la bande de base, on compare les signaux corrigés aux signaux transférés dans la bande de base pour déterminer les caractéristiques de l'amplificateur (8) et les communiquer à un circuit de correction (4), **caractérisé en ce qu'** on génère des signaux de mesure, on multiplie les signaux de mesure avec les signaux et on compare les signaux de mesure des signaux avec le signal de mesure des signaux amplifiés et transférés à la bande de base pour déterminer les caractéristiques de l'amplificateur (8).

**8.** Procédé selon la revendication 7, **caractérisé en ce qu'** on multiplie les signaux de mesure avec des signaux corrigés.

**9.** Procédé selon la revendication 7, **caractérisé en ce qu'** on multiplie les signaux de mesure en amont du circuit de correction (4) avec les signaux.

**10.** Procédé selon la revendication 7, **caractérisé en ce que** l'amplitude du signal de mesure a une valeur telle que l'amplificateur (8) est commandée au moins au maximum par le signal de mesure.

**11.** Procédé selon la revendication 10, **caractérisé en ce que** le signal de mesure est multiplié par un symbole de canal d'information rapide.

FIG. 1

FIG. 2

**FIG. 3**

**EP 1 250 752 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9945640 A